Europäisches Patentamt

European Patent Office

Office européen des brevets

(11) Numéro de publication: **0 380 382**
**A1**

## (12) DEMANDE DE BREVET EUROPEEN

(21) Numéro de dépôt: **90400087.4**

(51) Int. Cl.5: **H05K 3/34, B23K 3/06**

(22) Date de dépôt: **12.01.90**

(30) Priorité: **17.01.89 FR 8900481**

(43) Date de publication de la demande:
**01.08.90 Bulletin 90/31**

(84) Etats contractants désignés:
**AT BE CH DE ES FR GB GR IT LI LU NL SE**

(71) Demandeur: **OREGA ELECTRONIQUE & MECANIQUE**
**9, Place des Vosges La Défense 5**
**F-92400 Courbevoie(FR)**

(72) Inventeur: **Constantin, François**
**Thomson-CSF, SCPI - Cédex 67**
**F-92045 Paris La Défense(FR)**
Inventeur: **Viargues, Patrick**
**Thomson-CSF, SCPI - Cédex 67**
**F-92045 Paris La Défense(FR)**

(74) Mandataire: **Chaverneff, Vladimir et al**
**THOMSON-CSF SCPI**
**F-92045 PARIS LA DEFENSE CEDEX 67(FR)**

(54) **Dispositif de soudage à la vague pour cartes de circuits imprimés.**

(57) Dispositif de soudage à la vague pour cartes (7) de circuits imprimés déja garnies de composants CMS collés et/ou de composants discrêts.

Il comporte une buse (15) dont le volet arrière (16) est articulé autour d'un axe (22). Un vérin (19) vient appuyer de temps à autre sur ce volet, de façon que la coulée arrière (24), qui était empêchée par le bord libre (14) de ce volet, puisse s'effectuer néanmoins de manière intermittente.

Fig.2

Fig.3

## DISPOSITIF DE SOUDAGE A LA VAGUE POUR CARTES DE CIRCUITS IMPRIMES

La présente invention se rapporte à un dispositif de soudage à la vague pour cartes de circuits imprimés.

Dans les industries électroniques qui fabriquent en grande série des cartes à circuit imprimé, le soudage des composants CMS préalablement collés et des composants discrets sur la carte se fait le plus souvent selon le procédé dit "à la vague", dans lequel une turbine entretient un débit constant d'alliage plomb-étain en fusion, s'écoulant sur un déversoir, ou buse, de forme prédéterminée.

La forme de la surface de l'alliage en fusion, sa vitesse d'écoulement, et surtout sa propreté sont des facteurs importants qui conditionnent la qualité des soudures.

D'une façon générale, une machine de soudage à la vague est composée de trois parties successives qui sont, de l'amont vers l'aval :
. un dispositif de "fluxage" grace auquel une solution décapante, appelée "flux" est projetée sur la face inférieure du circuit imprimé ; cette solution décapante détruit les oxydes sur le circuit imprimé et sur les pattes des composants préalablement collés sur ce circuit imprimé, ce qui permet de garantir une bonne soudabilité ;
. un dispositif de préchauffage, par rayonnement par exemple, qui permet, en chauffant ce circuit imprimé, d'activer et d'augmenter l'agressivité du flux, ainsi que d'éviter un choc thermique lors du passage de la vague ;
. le dispositif de soudage à la vague proprement dit, dans lequel s'effectue le passage de la face inférieure du circuit imprimé sur une vague d'alliage étain-plomb en fusion.

L'invention concerne la troisième partie de ce genre d'installation, c'est-à-dire le dispositif de soudage à la vague. Bien qu'elle se rapporte plus particulièrement aux dispositifs de ce type qui sont munis d'une buse asymémétrique, elle peut aussi s'appliquer aux dispositifs de soudage à la vague qui sont équipés d'une buse symétrique (à ce propos, il convient de rappeler que l'"asymétrie" ou la "symétrie" d'une buse de soudage à la vague est appréciée dans le plan vertical et axial de cette buse).

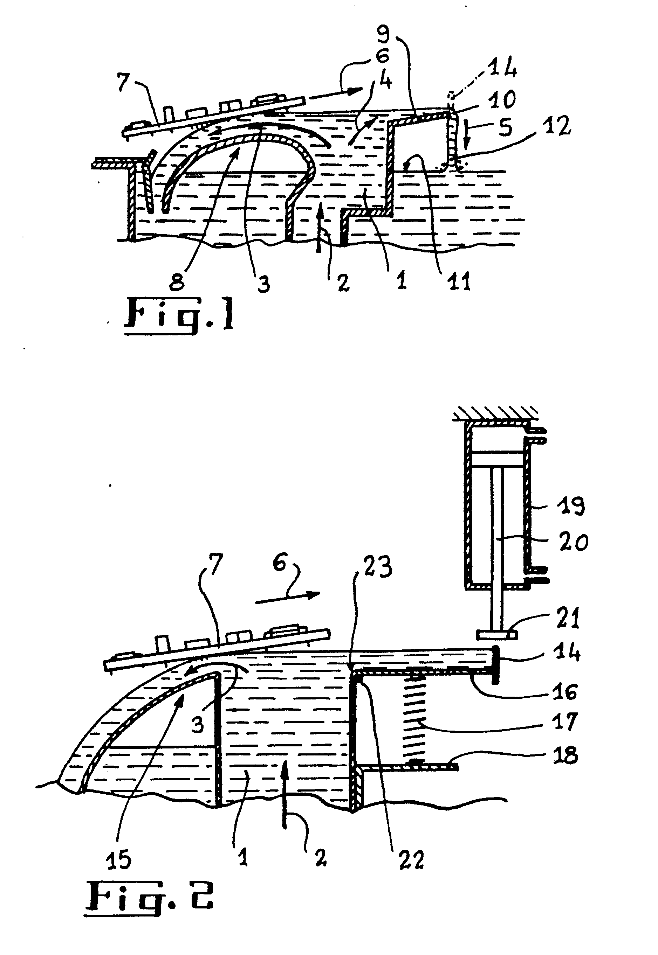

La figure 1 jointe représente très schématiquement, en coupe verticale axiale, un dispositif de soudage à la vague d'un type connu et à buse asymétrique.

Sur cette figure, le trajet de la soudure 1 est indiqué par les flèches 2 à 5, tandis que le trajet de la carte à circuit imprimé 7 est indiqué par la flèche 6.

La montée de la soudure se fait, en raison de la pression exercée par la pompe, non représentée,
de bas en haut comme indiqué par la flèche 2, c'est-à-dire du fond de la buse asymétrique 8 vers son embouchure.

Au niveau de cette embouchure, la circulation, c'est-à-dire le retour, de la soudure liquide 1 a lieu selon deux directions longitudinales :
. un premier trajet de retour, indiqué par la flèche 3, qui s'effectue vers l'amont, ou autrement dit vers l'"avant" de la buse 8 ; c'est le flot de soudure qui s'écoule selon cette direction 3 qui vient lécher la face inférieure de la plaque de circuit imprimé 7 qui, quant à elle, circule de l'amont vers l'aval selon la direction 6 ;
. un second trajet de retour, indiqué par les flèches 4 et 5, qui s'effectue vers l'aval, ou autrement dit vers l'arrière" de la buse asymétrique 8.

Le flot de soudure qui suit le trajet "arrière" 4, 5 est guidé par un rebord ou "volet" fixe 9, couramment dénommé "volet arrière" de la buse asymétrique.

Sur certains types de circuits imprimés, il s'avère que la vitesse du flot arrière doit être nulle pour avoir un bon réessuyage de la soudure sur le circuit.

D'une manière générale, il a donc été observé qu'avec ce genre de buse à coulée "arrière" 4,5, les résultats obtenus n'étaient pas optimaux, le pourcentage de défauts de soudure sur un grand nombre de plaques de circuit imprimé s'avérant trop important pour être vraiment satisfaisant, en particulier aux cadences de plus en plus élevées demandées actuellement.

Pour pallier à cet inconvénient, il a été construit des buses asymétriques de soudage à la vague qui étaient conformées pour ne pas engendrer de flot de retour arrière tel que le flot 4, 5 de la figure 1 décrite ci-dessus. Dans ce but, il a été rajouté, à l'extrémité libre 10 du volet arrière de la buse selon la figure 1, un rebord 14 orienté vers le haut, comme indiqué en traits mixtes sur cette figure 1, ce qui bloque le flot 4 et empêche donc la coulée 5, 12 en direction de la surface 11 du bain de soudure 1.

L'inconvénient de ce dernier dispositif réside dans la création d'une zone statique de bain de soudure sur toute la partie "arrière" de la buse.

Cette zone statique à tendance, à la longue, d'une part à se recouvrir de résidus de toutes sortes, et d'autre part à entraîner la création, à sa surface, d'une fine peau d'oxyde d'étain. Cette peau, lorsqu'elle s'est suffisamment étendu vers l'amont, a tendance à se fixer sur la face inférieure du circuit imprimé et, du fait qu'elle n'est pas fluide comme c'est le cas pour l'étain en fusion, à créer des court-circuits entre les pattes des composants sur lesquelles elle vient s'accrocher.

Pour pallier à ce dernier inconvénient, il est procédé, sur ce genre de dispositif, à un nettoyage manuel à la raclette de la surface arrière du bain de soudure, ce nettoyage étant effectué de temps à autre par un des ouvriers chargés de la surveillance du fonctionnement de l'installation de soudage à la vague.

Ce nettoyage est un travail délicat, difficile (car devant préférentiellement s'effectuer sans arrêt dommageable de l'installation), et assez pénible : en pratique il nécessite la présence d'un ouvrier spécialisé pour réaliser ce travail, qui doit être effectué avec grand soin pour éviter les risques de défauts de soudure.

En outre, il arrive souvent que, en particulier lorsque les plaques de circuit imprimé sont constituées par des cartes fines et allongées, l'on soit amené à utiliser un rail axial de soutien de la carte, familièrement appelé "ski", et généralement constitué en titane.

Dans un tel cas, il n'est pas possible de passer une raclette qui fait toute la largeur de la buse, puisque celle-ci est divisée en deux par le ski axial : il faut utiliser une raclette spéciale en deux parties, ce qui a pour inconvénient de laisser des traces d'oxyde et d'impuretés sur les bords du ski.

Il serait bien entendu possible d'envisager l'utilisation d'une palette de nettoyage automatique, dans le but d'éviter d'avoir à utiliser une personne pour effectuer le travail de raclage précité. Le mouvement nécessité est cependant relativement complexe, de sorte qu'il faudrait compter sur de grosses difficultés de conception et de réalisation pour un tel dispositif automatique de raclage. De plus, en cas d'utilisation d'un "ski" longitudinal, l'inconvénient dû à la subsistance d'impuretés le long du ski existerait toujours.

L'invention vise à remédier à ces inconvénients. Elle se rapporte à cet effet à une machine de soudage à la vague dont la buse, qui est indifféremment symétrique ou asymétrique, présente un moyen, tel que le "volet arrière" précité, qui s'oppose au retour de la soudure au niveau de la partie "arrière" de la buse, c'est-à-dire de la partie aval de celle-ci. Ce volet arrière est néanmoins équipé de moyens pour autoriser, à des instants et pendant des durées déterminées par une organe de commande, la coulée de la soudure au niveau de cette partie arrière et dans le sens qui correspond au retour de cette soudure, afin d'éviter le maintien pendant un temps excessif d'une masse statique de soudure en fusion au niveau de la surface du bain dans cette partie arrière de la buse.

Selon une forme préférentielle d'exécution, ce volet arrière est lui-même articulé et commandé pour pourvoir s'abaisser, à des instants et pendant des laps de temps déterminés, pour permettre alors la coulée de la soudure dans le sens du retour, à la partie arrrière de la buse, et se relever ensuite pour interdire alors à nouveau cette coulée.

De toute façon, l'invention sera bien comprise, et ses avantages et autres caractéristiques ressortiront, lors de la description suivante d'un exemple non limitatif de réalisation, en référence au dessin schématique annexé dans lequel :

- Figure 2 représente, de manière très simplifiée, une buse asymétrique telle que celle selon la figure 1, mais modifiée conformément à l'invention ;

- Figure 3 montre la buse de la figure 2 pendant la phase d'abaissement de son volet arrière ;

- Figure 4 est une vue en perspective simplifiée de la partie principale de la buse selon les figures 2 et 3 ; et

- Figure 5 est une représentation schématique du volet arrière abaissable équipant une des variantes possibles de la buse de la figure 2.

En se reportant à l'ensemble des figures 2 à 4, la buse asymétrique de soudage à la vague 15 représentée ici diffère de celle de la figure 1 par les points suivants :

. son volet arrière 16, qui est muni d'un rebord d'extrémité 14 apte à endiguer le flot de soudure liquide qui circule selon la flèche 4 dans le cas de la buse de la figure 1, est articulé autour d'un axe 22 parallèle au rebord 14 et confondu avec le bord amont 23 de ce volet 16 ;

. ce volet arrière 16 est normalement maintenu en position quasi-horizontale, selon la figure 2, par deux ressorts de répulsion verticaux 17, fixés sur un socle horizontal 18 faisant partie du bâti de la machine, et placés respectivement de part et d'autre de la zone centrale longitudinale du volet 16 qui reçoit le bain de soudure liquide 1 ;

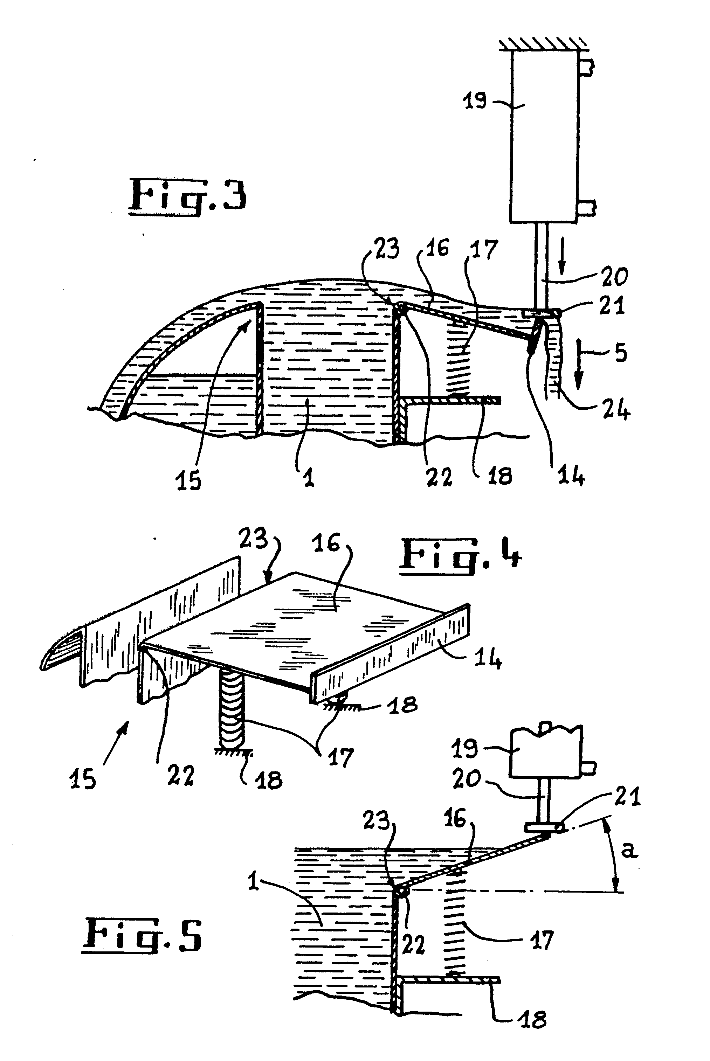

. un verin vertical 19 est fixé au bâti de la machine, au-dessus et à l'aplomb du rebord 14, et est positionné de telle sorte que, lorsque sa tige 20 est rentrée (figure 2), son extrémité libre 21 ne s'appuie pas sur ce rebord 14, tandis que lorsque cette même tige 20 est sortie (figure 3), elle appuie du haut en bas sur ce rebord 14 et entraîne, en contrecarrant la force de répulsion des deux ressorts verticaux 17, la rotation dans le sens horaire du volet mobile 16 autour de son axe d'articulation 22, et donc l'abaissement de ce volet et de son rebord d'extrémité 14.

Le vérin 19 est un vérin pneumatique à double-effet qui est commandé par un organe logique central de commande et de calcul, non représenté, en fonction d'indications qui lui sont fournies d'une part par une génératrice tachymétrique, non représentée, dont la roue codeuse mesure les temps et vitesse d'avancée des cartes 7, et d'autre part par des cellules photoélectriques, également non représentées, qui détectent en particulier la présence ou l'absence d'une carte 7 de circuit imprimé au niveau de la vague de soudure (figure 1).

Le fonctionnement du dispositif qui vient d'être décrit est le suivant :

L'organe logique central de commande et de calcul fournit au vérin 19 des impulsions de commande de sortie de sa tige 20 à des intervalles de temps T qui sont d'une part supérieurs à une valeur limite inférieure To, égale par exemple au temps de défilement devant la buse 15 de quelques cartes 7, et qui sont d'autres part tels qu'ils ne commandent pas la sortie de cette tige 20 lorsqu'une plaque 7 est en position de soudage sur la buse (position de la figure 2).

Lorsque cette impulsion est donnée au vérin 19 (figure 3), sa tige 20 sort, et son extrémité 21 vient pousser le rebord 14 vers le bas, ce qui entraine l'abaissement du volet 14 pendant toute la durée (relativement courte) de cette impulsion.

La soudure en fusion s'écoule alors à l'arrière de la buse, dans la direction de retour 5 et selon le voile vertical désigné par la référence 24 sur la figure 3. Cette relativement courte coulée vers l'arrière de la buse permet d'éviter la formation d'un voile d'impuretés et d'oxyde sur la partie arrière du bain, ce qui est le but recherché pour un bon fonctionnement de cette buse.

Comme il va de soi, l'invention n'est pas limitée à l'exemple de réalisation qui vient d'être décrit en référence aux figures 2 à 4. Le volet mobile 16 pourrait être un volet sans rebord extrême 14, comme c'est le cas sur la figure 5 : dans un tel cas, la position "haute" du volet 16 n'est plus horizontale, mais relevée vers le haut d'un angle a suffisant pour qu'au repos du vérin 19, le bain de soudure liquide 1 ne déborde pas vers l'arrière. Le volet 16 pourrait être fixe en position, horizontal et garnir d'un rebord 14 comme sur la figure 2, mais ce rebord extrême 14 pourrait lui-même être escamotable pour permettre la coulée arrière intermittente conforme à la présente invention, etc...

## Revendications

1 - Dispositif de soudage à la vague pour cartes de circuits imprimés, ce dispositif étant équipé d'une buse (15) munie de premiers moyens (16, 14) aptes à s'opposer au retour de la soudure (1) au niveau de la partie aval, ou "arrière" de la buse, caractérisé en ce qu'il est équipé de seconds moyens (16 à 22) pour autoriser, à des instants et pour des durées déterminés par un organe de commande, la coulée de la soudure (1, 24) au niveau de cette partie arrière (16) et dans le sens (5) qui correspond au retour (24) de cette soudure, afin d'éviter le maintien pendant un temps excessif d'une masse statique de soudure en fusion au niveau de la surface du bain (1) dans cette partie arrière (16) de la buse (15).

2 - Dispositif de soudage à la vague selon la revendication 1, caractérisé en ce que ces seconds moyens comportent un volet arrière (16) qui est articulé et commandé pour pouvoir s'abaisser, à ces instants et pendant ces durées déterminés, pour permettre la coulée de la soudure (1, 24) dans le sens (5) du retour arrière, et se relever ensuite pour interdire alors à nouveau cette coulée.

3 - Dispositif de soudage à la vague selon la revendication 2, caractérisé en ce que ce volet arrière est articulé autour de son bord amont (23) qui est orthogonal au sens (6) de défilement des plaques (7), et en ce que son mouvement de basculement est imprimé par un vérin (19) qui agit sur son bord libre aval (14), parallèle et opposé à ce bord amont (23).

Fig.1

Fig.2

# Fig.3

# Fig.4

# Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 118 091  (ELECTROVERT LTD) <br> * page 12, ligne 2 - page 13, paragraphe 2; figures 6,7 * | 1-3 | H 05 K    3/34 <br> B 23 K    3/06 |
| Y | EP-A-0 278 885  (O.S.L.) <br> * revendication 1; colonne 3, lignes 52-59 * | 1-3 | |
| A | EP-A-0 113 696  (D.N. ROGERS) <br> * page 1, lignes 1-13; revendication 1 * | 1-3 | |
| A | EP-A-0 278 166  (NIHON DEN-NETSU KEIKI CO. LTD.) <br> * colonne 5, lignes 1-9; figure 4 * | 1 | |
| | | | **DOMAINES TECHNIQUES RECHERCHES (Int. Cl.5)** |
| | | | H 05 K    3/00 <br> B 23 K    3/00 |

Le présent rapport a été établi pour toutes les revendications

| Lieu de la recherche | Date d'achèvement de la recherche | Examinateur |
|---|---|---|
| BERLIN | 10-04-1990 | CLOSA D. |